# EUROPÄISCHE PATENTSCHRIFT

(11) **EP 3 530 095 B1**
(45) Veröffentlichungstag und Bekanntmachung des Hinweises auf die Patenterteilung: **16.09.2020**
(21) Anmeldenummer: 19401007.0
(22) Anmeldetag: 13.02.2019
(51) Int. Cl.: A01C 21/00

(54) **SÄMASCHINE**
SOWING MACHINE
SEMOIR

(30) Priorität: 21.02.2018 DE 102018103857; 11.02.2019 DE 102019103233
(43) Veröffentlichungstag der Anmeldung: 28.08.2019
(73) Patentinhaber: Amazonen-Werke H. Dreyer GmbH & Co. KG, 49205 Hasbergen (DE)
(72) Erfinder: Wessels, Mario, 27777 Ganderkesee (DE)

(56) Entgegenhaltungen:
- EP-A1- 1 415 523
- WO-A1-2017/011355
- US-A1- 2016 095 274
- US-A1- 2016 302 353

## Beschreibung

Die Erfindung betrifft eine Sämaschine gemäß dem Oberbegriff des Patentanspruches 1 und ein Verfahren zum Betreiben der Sämaschine.

Eine derartige Sämaschine ist in US 20150059630 A1 beschrieben. Diese als Einzelkornsämaschine ausgebildete Sämaschine weist einen Zentralrahmen mit einem quer zur Fahrtrichtung verlaufenden Tragbalken auf. Auf dem Zentralrahmen sind zwei separate Saatgutvorratsbehälter angeordnet, welche dazu eingerichtet sind, große Mengen an verschiedenen Saatgütern zu bevorraten. An dem Tragbalken ist in gleichmäßigen Abständen zueinander eine Mehrzahl von Säaggregaten angeordnet, wobei ein Säaggregat jeweils zwei getrennte Saatgutzubringeinrichtungen und zwei Ausbringorgane aufweist. Mittels eines separaten Dosierorganes wird hierbei jeweils von einer Saatgutzubringeinrichtung ein Saatgutstrom zum Ausbringorgan erzeugt. Das Ausbringorgan wiederum ist dazu eingerichtet eine Saatgutmenge zum Boden zu fördern.

Das Säaggregat ist außerdem mit Bodenbearbeitungswerkzeugen versehen, um die zum Boden geleitete Saatgutmenge in den Boden einzuarbeiten. Um die Saatgutzubringeinrichtungen eines Säaggregates mit Saatgut aus den Saatgutvorratsbehältern zu versorgen, kann die Sämaschine mit einem Gebläse versehen sein, so dass eine pneumatische Förderung genutzt werden kann. Von den Saatgutzubringeinrichtungen wird den Ausbringorganen der Saatgutstrom zudosiert, wo dieser vereinzelt wird, so dass die Saatgutmenge als einzelne Körner im Boden abgelegt wird. Diese Einzelkornsämaschine umfasst außerdem eine die Dosierorgane und Ausbringorgane steuernde Steuer- und/oder Regeleinrichtung.

Die vorstehend beschriebene Sämaschine ist dazu eingerichtet, verschiedenartige Saatgüter in einer Überfahrt eines Feldes zu pflanzen. Hierzu werden entweder jeder Saatgutsorte eine separate Saatgutzubringeinrichtung und ein separates Ausbringorgan zugeordnet oder die Ausbringorgane der einzelnen Reihen werden mit einem Puffersystem mit Saatgutrückfuhrmöglichkeit versehen. Nachteilig ist hierbei, dass in jedem Fall das System eine Vielzahl aktorischer Komponenten benötigt, um während einer Überfahrt verschiedenartige Saatgütern zu säen. Diese Komponenten sind kostenintensiv und steigern die Komplexität der Vorrichtung. Weiter nachteilig ist, dass, zumindest in der Ausführungsform in der die Ausbringorgane mit dem Puffersystem ausgerüstet sind, ein erstes Saatgut aus den Ausbringorgan entleert werden muss, bevor ein zweites Saatgut mittels dieses Ausbringorganes ausgebracht werden kann. Dieser Schritt ist zum einen zeitaufwendig, wodurch das Arbeitsergebnis negativ beeinflusst wird, da die Maschine entweder halten muss oder ungeplant Fehlstellen, das heißt unbesäte Bereiche, entstehen. Und zum anderen erfordert dieser Schritt eine aufwendige Aktorik zum Entleeren des Ausbringorganes und zur Rückführung des entleerten Saatgutes.

Aus der Druckschrift US 6845724 B2 ist eine weitere Sämaschine bekannt. Auch diese Sämaschine ist dazu eingerichtet, verschiedenartige Saatgüter zu pflanzen. Hierzu wird entweder jeder Saatgutsorte ein separates Ausbringorgan zugeordnet oder die Steuer- und/oder Regeleinrichtung muss dazu eingerichtet werden, eine im Ausbringorgan verbleibende Restmenge zu berechnen. Nachteilig ist hierbei, dass beide Lösungen aufwendig sind und zusätzlich kostenintensive und komplexe Komponenten benötigen.

Eine weitere Sämaschine mit den Merkmalen des Oberbegriffs des Anspruchs 1 ist aus US 2016/302353 A1 bekannt. Die Steuer- und/oder Regeleinrichtung dieser Sämaschine ist zudem dazu eingerichtet, feldspezifischer Daten zu speichern.

Die Aufgabe der Erfindung besteht daher darin, die Steuer- und/oder Regeleinrichtung weiterzubilden, um eine vereinfachte Sämaschine dazu einzurichten, verschiedenartige Saatgüter in einer Überfahrt zu säen.

Diese Aufgabe wird erfindungsgemäß durch eine Sämaschine mit den Merkmalen des unabhängigen Anspruchs 1 gelöst. Erfindungsgemäß ist vorgesehen, dass die Steuer- und/oder Regeleinrichtung dazu eingerichtet ist, das Verhältnis zwischen dem von zumindest einem der Dosierorgane erzeugten Saatgutstrom und der von dem Ausbringorgan geförderten Saatgutmenge einzustellen.

Infolge dieser Maßnahme ist eine vereinfachte Sämaschine geschaffen, die dazu eingerichtet ist während einer Überfahrt schnell zwischen verschiedenartigen Saatgütern zu wechseln und diese zu säen, indem der erzeugte Saatgutstrom und die ausgebrachte Saatgutmenge mittels der Steuer- und/oder Regeleinrichtung aufeinander abgestimmt werden. Erfindungsgemäß ist das Verhältnis zwischen dem von einem der Dosierorgane erzeugten Saatgutstrom und der von dem Ausbringorgan geförderten Saatgutmenge von der Steuer- und/oder Regeleinrichtung auf zumindest annährend eins eingestellt, so ist die Verweilmenge und Verweildauer des zu säenden Saatgutes im Ausbringorgan dieser Reihe in einfacher Weise minimiert. Dies ist der Fall, da so die dem Ausbringorgan zuströmende Menge zumindest annährend der ausgebrachten Saatgutmenge entspricht, so dass vorzugsweise kein Puffer vor dem Ausbringorgan entsteht. Bei der erfindungsgemäßen Ausführungsform der Steuer- und/oder Regeleinrichtung ist ein einziges Ausbringorgan ohne zusätzliche aktorische Komponenten zum Säen verschiedenartiger Saatgüter eingerichtet. Weiter vorteilhaft ist, dass zur Auswahl des zu säenden Saatgutes die im Speicher der Steuer- und/oder Regeleinrichtung hinterlegten feldspezifischen Daten berücksichtigt werden können.

In einer vorteilhaften Weiterbildung der Erfindung ist vorgesehen, dass die zumindest zwei getrennten Saatgutzubringeinrichtungen zumindest zwei voneinander unterschiedliche Saatgutsorten zubringen. Folglich ist es in dieser Weiterbildung schnell und besonders einfach möglich zwischen verschiedenartigen Saatgütern zu wechseln, indem das Dosierorgan einer Saatgutzubringeinrichtung deaktiviert wird, während das Dosierorgan der das unterschiedliche Saatgut zubringenden anderen Saatgutzubringeinrichtung aktiviert wird und der jeweilige erzeugte Saatgutstrom mit Hilfe des einen einzigen Ausbringorganes vereinzelt und zum Boden geleitet wird. Unter unterschiedlichen Saatgutsorten sind hierbei sowohl verschiedenartige Sorten einer Pflanzenart zu verstehen, bspw. an spezielle Feldcharakteristika besonders angepasste Sorten, als auch Saatgüter verschiedener Pflanzenarten, bspw. Mais, Soja oder Sonnenblumen. In besonders vorteilhafter Weise wirkt diese Weiterbildung mit den im Speicher der Steuer- und/oder Regeleinrichtung hinterlegten feldspezifischen Daten zusammen, indem anhand dieser Daten die für den jeweiligen Feldabschnitt am besten geeignete Saatgutsorte ausgewählt und ausgebracht wird. Hierzu sind der Steuer- und/oder Regeleinrichtung neben den feldspezifischen Daten auch die Charakteristika der unterschiedlichen Saatgutsorten bekannt, so dass diese hinsichtlich der möglichst optimalen Eignung abgeglichen werden können.

In einer weiteren vorteilhaften Weiterbildung ist das Verhältnis zwischen Saatgutstrom und Saatgutmenge zumindest annährend konstant von der Steuer- und/oder Regeleinrichtung geregelt. In besonders einfacher Weise ist die Regelung der Dosierorgane so der angestrebten Ausbringcharakteristik der Ausbringorgane angepasst und andersherum. Mit anderen Worten: bei notwendigen Veränderungen einer der beiden Regelgrößen, Saatgutstrom und Saatgutmenge, ist die Steuer- und/oder Regeleinrichtung dazu eingerichtet, die jeweilige andere Regelgröße in einer Art und Weise anzupassen, dass das Verhältnis zumindest annährend konstant bleibt. Vornehmlich vorteilhaft ist hierbei, dass die vereinfachte Sämaschine mit seiner Steuer- und/oder Regeleinrichtung flexibel und schnell zur Anpassung der Regelgrößen eingerichtet ist.

In einer weiteren vorteilhaften Ausführungsform der Erfindung ist vorgesehen, dass die Steuer- und/oder Regeleinrichtung dazu eingerichtet ist, die Position und/oder Positionsänderung des zumindest einen Säaggregates in einem bearbeiteten Feld zu bestimmen, dass die Steuer- und/oder Regeleinrichtung in Abhängigkeit der Position des zumindest einen Säaggregates im Feld die Dosierorgane steuert. In zweckmäßiger Weise ist die Sämaschine infolge dieser Maßnahme dazu eingerichtet, in Abhängigkeit der Position verschiedenartige Saatgutsorten auszubringen. Somit lassen sich so in besonders einfacher Weise die feldspezifischen Daten im Betrieb nutzen, um ein möglichst optimales Säbild hinsichtlich des Ertrages durch die spezifische Ausbringung geeigneter Saatgutsorten zu erzeugen. Ein weiterer Vorteil dieser Ausführungsform ist die Möglichkeit zur Erzeugung beliebiger Säbilder. Diese beliebigen Säbilder können zum einen Ausdruck finden durch das gezielte Anordnen von Fehlstellen, wie es beispielsweise zum Anlegen eines Maislabyrinths denkbar wäre, oder um nicht bewuchsfähige Teilflächen auszusparen und somit Saatgut einzusparen. Zum anderen sind Säbilder aus zumindest zwei unterschiedlichen Pflanzensorten denkbar, um beispielsweise geometrisch erkennbare Figuren anzulegen, die zum Beispiel in Luftaufnahmen zu sehen wären. Ein solches Säbild könnte beispielsweise aus Maispflanzen einerseits und Sonnenblumen andererseits bestehen.

In einer vorteilhaften Weiterbildung ist vorgesehen, dass die Steuer- und/oder Regeleinrichtung in Abhängigkeit der Positionsänderung des zumindest einen Säaggregates das zugeordnete Ausbringorgan steuert. Bei gattungsgemäßen Sämaschinen, bei denen sich der Tragbalken an dem die Säaggregate angeordnet sind quer zur Fahrtrichtung weit erstreckt, kommt es regelmäßig bei Kurvenfahrten zu erheblichen Abweichungen bei der Ablage des vereinzelten Saatgutes. Das Problem resultiert aus den unterschiedlichen Bahngeschwindigkeiten, die die Säaggregate in Abhängigkeit ihres Kurvenradius erfahren. Während die Säaggregate im Kurveninneren verlangsamt werden und somit bei unveränderter Steuerung des Ausbringorganes einen reduzierten Abstand zwischen den abgelegten Saatkörnern erzeugen, kommt es am Kurvenrand zu einem gesteigerten Ablageabstand in Folge erhöhter Bahngeschwindigkeiten. In zweckmäßiger Weise ist diese Weiterbildung dazu eingerichtet, unterschiedliche Bahngeschwindigkeiten zu kompensieren, indem die Steuerung des Ausbringorganes mit Hilfe der bestimmten Positionsänderung angepasst wird. Alternativ zur Positionsänderung kann auch die Drehrate bestimmt und zur Kompensation genutzt werden. In besonders zweckmäßiger Weise wird die Positionsänderung bzw. Drehrate für jedes Säaggregat einzeln bestimmt und zur Steuerung des jeweiligen Ausbringorganes berücksichtigt.

In einer weiteren vorteilhaften Weiterbildung ist vorgesehen, dass die feldspezifischen Daten positionsbezogene Informationen über auszubringende Saatgutsorten beinhalten. Ist besonders einfacher und simpler Weise ist die Sämaschine so dazu in der Lage, anhand der feldspezifischen Daten und der ermittelten Position das geeignete Saatgut auszubringen. In dem Speicher der Steuer- und/oder Regeleinrichtung ist lediglich eine Zuordnung zu hinterlegen, welche Auskunft darüber enthält welche Saatgutzubringeinrichtung welche Saatgutsorte zubringt.

Der Betrieb der vorstehend beschriebenen Sämaschine, insbesondere die Bearbeitung eines Feldes, zeichnet sich dadurch aus, dass in der Steuer- und/oder Regeleinrichtung feldspezifische Daten gespeichert sind und die folgenden Verfahrensschritte ausgeführt werden:
*a*. Bestimmen der Position und/oder Positionsänderung des zumindest einen Säaggregates in dem zu bearbeitenden Feld, und
*b.* Ansteuerung des Dosierorgans des für die jeweiligen Position die geeignete Saatgutsorte zubringende Saatgutzubringeinrichtung anhand der feldspezifischen Daten und/oder Ansteuern des zumindest einen Ausbringorgans auf Basis der bestimmten Positionsänderungen.

Zusammenfassend ist so eine gegenüber dem Stand der Technik besonders vorteilhaft vereinfachte Sämaschine geschaffen zum Säen verschiedenartiger Saatgüter in einer Überfahrt, indem die Steuer- und/oder Regeleinrichtung in vornehmlich zweckmäßiger Weise weitergebildet ist.

Weitere Einzelheiten der Erfindung sind der Beispielsbeschreibung und den Zeichnungen zu entnehmen. Die Zeichnungen zeigen
- Fig.1: einen Ackerschlepper und eine Einzelkornsämaschine in perspektivischer Ansicht,
- Fig.2: ein Säaggregat, wobei verschiedene Komponenten demontiert sind, in Teilschnitt und Ansicht von hinten,
- Fig.3: ein Feld in Ansicht von oben,
- Fig.4: eine Karte eines zu besäenden Feldes in schematischer Ansicht, und
- Fig.5: ein Säbild bei Kurvenfahrt in schematischer Ansicht.

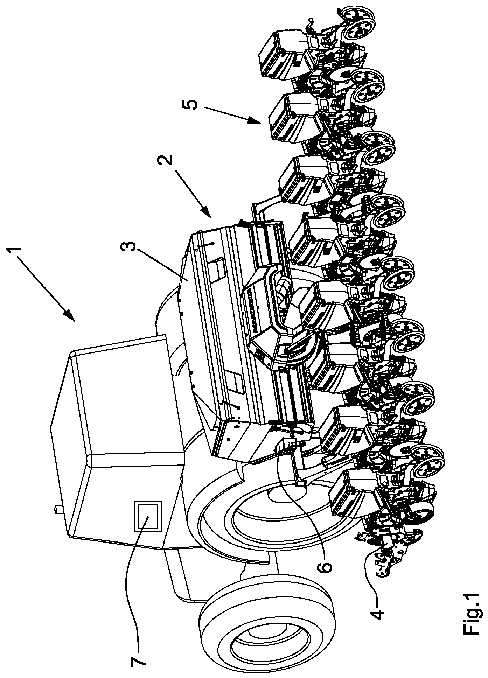

Ein Ackerschlepper 1 mit einer angehangenen und als Einzelkornsämaschine 2 ausgebildeten Sämaschine ist in Fig.1 gezeigt. Die Einzelkornsämaschine 2 umfasst an ihrem vorderen Ende einen Vorratsbehälter 3, welcher üblicherweise zur Bevorratung von Düngemittel dient. In Fahrtrichtung hinter dem Vorratsbehälter 3 sind an einem quer zur Fahrtrichtung verlaufenden Tragbalken 4 eine Mehrzahl von Säaggregaten 5 nebeneinander angeordnet. Die Einzelkornsämaschine 2 umfasst außerdem eine Steuer- und/oder Regeleinrichtung, welche in dieser Ausführungsform gebildet wird durch einen der Einzelkornsämaschine 2 zugeordneten Jobrechner 6 und eine auf dem Ackerschlepper 1 angeordnete Terminaleinheit 7. Die Terminaleinheit 7 ist in an sich bekannter Weise dazu eingerichtet, Informationen, wie auch feldspezifische Daten, zu speichern und anzuzeigen, sowie Eingaben zu ermöglichen. Der Jobrechner 6 hingegen dient der Verarbeitung von Signalen und zum Steuern und/oder Regeln von Maschinenteilen und deren Funktionen der Einzelkornsämaschine 2. Der Jobrechner 6 und die Terminaleinheit 7 sind verbunden und bilden gemeinsam die Steuer- und/oder Regeleinrichtung.

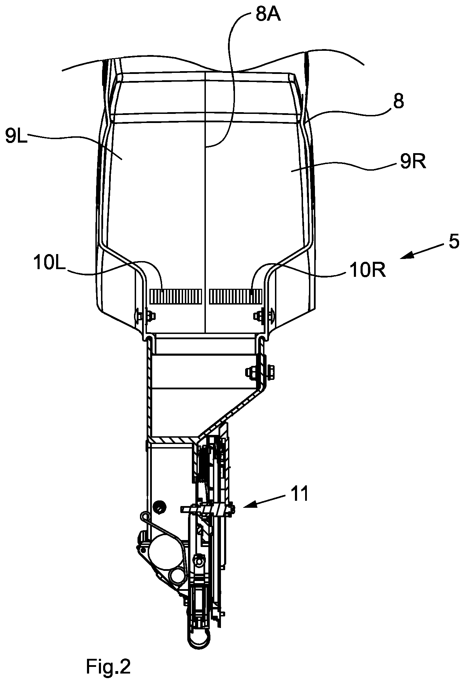

In Fig.2 ist ein Säaggregat 5 in Teilschnitt und Ansicht von in Fahrtrichtung hinten zu sehen, wobei einige Komponenten demontiert sind. Das Säaggregat 5 umfasst an seinem oberen Ende einen Saatgutvorratsbehälter 8. Der Saatgutvorratsbehälter 8 wird durch eine Trennwand 8A in eine linke und eine rechte Saatgutzubringeinrichtung 9L, 9R geteilt. Jeder Saatgutzubringeinrichtung 9L, 9R ist hierbei ein separates Dosierorgan 10L, 10R zugeordnet. Außerdem umfasst das Säaggregat 5 an seinem unteren Ende ein Ausbringorgan 11, welches dazu eingerichtet ist, unterschiedliche Saatgutsorten zu vereinzeln und eine Saatgutmenge zum Boden zu leiten, wo diese mit Hilfe entsprechender Werkzeuge eingearbeitet wird. Mittels der Dosierorgane 10L, 10R lässt sich so von der jeweiligen Saatgutzubringeinrichtung 9L, 9R ein Saatgutstrom zum Ausbringorgan 11 erzeugen, wo dieser Saatgutstrom vereinzelt wird und als vereinzelte Saatgutmenge im Boden abgelegt wird. Die Dosierorgane 10L, 10R eines jeden Säaggregates und die Ausbringorgane 11 aller Säaggregate sind jeweils mit einem durchsatzproportional steuerbarem Antrieb versehen und lassen sich so durch den Jobrechner 6 in Zusammenwirken mit der Terminaleinheit 7 steuern. Als Antrieb können drehzahlsteuerbare Motoren eingesetzt werden.

Jeweils ein Säaggregat 5 bildet mit den umliegenden und zusammenwirkenden Komponenten eine sogenannte Reiheneinheit der Einzelkornsämaschine 2. In der gezeigten Ausführungsform umfasst die Einzelkornsämaschine 2 folglich insgesamt acht Reiheneinheiten. Die getrennten Saatgutzubringeinrichtungen 9L, 9R sind erfindungsgemäß mit unterschiedlichen Saatgutsorten gefüllt. Die Saatgutsorten können sich bspw. hinsichtlich ihrer Eignung verschiedene Bodeneigenschaften unterscheiden oder auch von unterschiedlichen Pflanzenarten stammen. Um innerhalb einer Reihe unterschiedliche Saatgutsorten möglichst präzise und kontinuierlich zu säen ohne für jede Saatgutsorte ein zusätzliches Ausbringorgan vorzusehen, ist der Jobrechner 6 der Steuer- und/oder Regeleinrichtung dazu eingerichtet, das Verhältnis zwischen dem von dem jeweils aktiven Dosierorgan 10L, 10R einer Reihe erzeugten Saatgutstrom und der von dem Ausbringorgan 11 geförderten Saatgutmenge einzustellen. Erfindungsgemäß wird das Verhältnis auf zumindest annährend eins eingestellt, so dass der dem Ausbringorgan 11 zugebrachte Saatgutstrom zumindest annährend der ausgebrachten Saatgutmenge entspricht und in vorteilhafter Weise nahezu kein Puffer entsteht. Auf diese Weise sammelt sich vor dem Ausbringorgan 11 möglichst kein Saatgut, so dass schnell und einfach zwischen den zwei Saatgutsorten einer Reihe gewechselt werden kann, indem das eine Dosierorgan 10L deaktiviert und gleichzeitig das andere Dosierorgan 10R aktiviert wird oder andersrum. So ergibt sich prinzipiell ein schneller und fließender Übergang zwischen der Ausbringung unterschiedlicher Saatgutsorten innerhalb einer Reihe mittels eines Ausbringorganes 11. Ansonsten arbeitet die Einzelkornsämaschine 2 in an sich bekannter Weise, nämlich dass pro Reiheneinheit Saatgutkörner in einem möglichst gleichmäßigen Abstand a zueinander abgelegt und in den Boden eingearbeitet werden.

Wie vorstehend bereits beschrieben, ist die Terminaleinheit 7 der Steuer- und/oder Regeleinrichtung dazu eingerichtet, feldspezifische Daten zu speichern. Die feldspezifischen Daten enthalten Informationen darüber, an welcher Stelle eines zu bearbeitenden Feldes welche der durch die Saatgutzubringeinrichtungen 9L, 9R zubringbaren Saatgutsorten auszubringen ist. Mit anderen Worten: durch die feldspezifischen Daten können in der Terminaleinheit 7 beliebige Säbilder, sei es zu potenziell ertragssteigernden Zwecken oder aus formschöpferischen Gründen, gespeichert werden. Zudem ist vorgesehen, dass jedes Säaggregat 5 mit zumindest einem Sensor, welcher die Position und die Positionsänderung oder Drehrate des Säaggregates 5 ermittelt, versehen ist. Üblicherweise kann hierzu ein gewöhnlicher GPS-Sensor eingesetzt werden, so dass sich eine zusammenwirkende Sensoranordnung ergibt. Alternativ sind auch diverse andere Sensoranordnungen und/oder -schaltungen denkbar, die zur Ermittlung der obenstehenden Daten eingerichtet sind. Der Jobrechner 6 ist mit den entsprechenden Sensoren verbunden und verarbeitet deren Signale in der Folge derart, dass er die jeweiligen Dosierorgane 10L, 10R unter gleichzeitiger Berücksichtigung der feldspezifischen Daten ansteuert. So lassen sich die gespeicherten Säbilder positionsgenau auf ein zu bearbeitendes Feld mittels der erfindungsgemäßen Einzelkornsämaschine 2 übertragen.

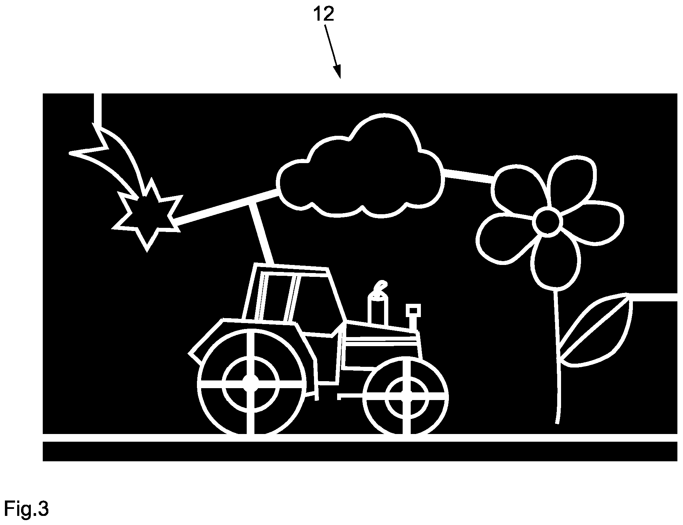

In Fig.3 ist ein Luftbild eines durch die erfindungsgemäße Sämaschine bearbeiteten Feldes 12 in schwarz/weiß zu sehen. Schwarz gekennzeichnet sind hierbei besäte Bereiche, die bspw. von Maispflanzen bedeckt sind. Die weißen Flächen sind in diesem Beispiel unbesäte Bereiche, d.h. Aneinanderreihungen von gezielt platzierten Fehlstellen, an denen kein Saatkorn in den Boden eingearbeitet wurde, um das gewünschte Säbild zu erzeugen. Dieses Maislabyrinth lässt sich nicht nur, wie gewohnt, erzeugen, indem die Maispflanzen in einem frühen Wachstumsstadium gezielt gehäckselt werden, sondern vielmehr direkt bei der Ausbringung von Saatgut durch die Einzelkornsämaschine 2 anlegen. Hierzu wird das gewünschte Säbild in Form von feldspezifischen Daten in der Terminaleinheit 7 gespeichert. Anschließend werden bei der ansonsten unveränderten, üblichen Bearbeitung des Feldes 12 mittels der hinter einem Ackerschlepper 1 angehangenen, erfindungsgemäßen Einzelkornsämaschine 2 die feldspezifischen Daten mit den von dem Jobrechner 6 durch die Sensoranordnung ermittelten Positionen der Säaggregate 5 verglichen. Befindet sich ein oder mehrere Säaggregat(e) 5 an einer Position, an der laut feldspezifischen Daten eine Fehlstelle geplant ist, wird das jeweilige Ausbringorgan 11 von dem Jobrechner 6 zeitweise deaktiviert. Das Ausbringorgan 11 bleibt solange deaktiviert, bis wieder eine Position erreicht ist, die zu besäen ist. Hierbei ist es zweckmäßig, dass die entstehende Verzögerung bis das nächste Saatkorn in den Boden eingearbeitet werden kann, die sich nach Wiederaktivierung des Ausbringorganes 11 ergibt, von dem Jobrechner 6 unter zusätzlicher Betrachtung der Fahrtgeschwindigkeit kompensiert wird. Die Kompensation kann erreicht werden indem das Ausbringorgan 11 mit entsprechend großem Vorlauf wieder aktiviert wird.

Damit vor dem Ausbringorgan 11 durch die vorstehend beschriebene Unterbrechung keine Ansammlung von Saatgut entsteht, ist vorgesehen, dass das Verhältnis zwischen dem Saatgutstrom von dem aktivierten Dosierorgan 10L, 10R und der vom Ausbringorgan 11 ausgebrachten Saatgutmenge zumindest annährend konstant von dem Jobrechner 6 geregelt ist. In diesem Fall wird zuerst die Saatgutmenge auf null gesetzt, indem das Ausbringorgan 11 zeitweise deaktiviert wird. Um das Verhältnis zumindest annährend konstant zu regeln, wird auch der Saatgutstrom auf null gesetzt, das heißt das zuletzt aktivierte Dosierorgan 10L, 10R wird ebenfalls zumindest zeitweise deaktiviert.

Durch die flächendeckende Bearbeitung des Feldes 12 auf die vorstehend beschriebene Weise wird das gewünschte Säbild anhand der feldspezifischen Daten angelegt. Nach Aufgang der Saat zeigt sich von oben betrachtet das in Fig.3 gezeigte Muster.

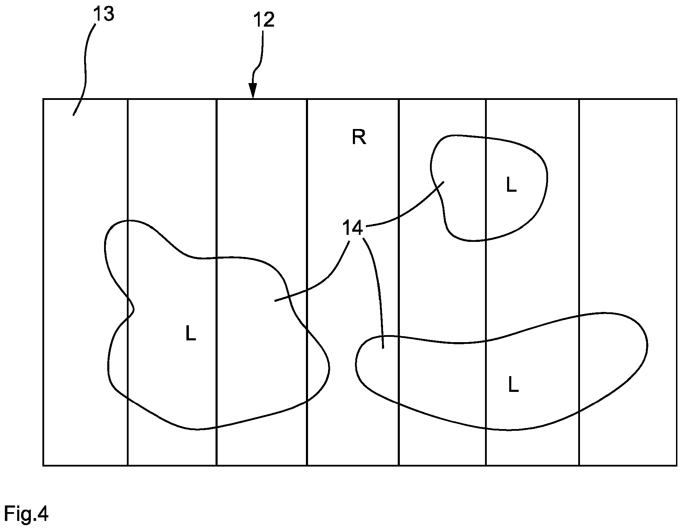

Fig.4 zeigt eine Karte eines zu besäenden Feldes 12 in schematischer Ansicht und soll als weitere Veranschaulichung zum Einsatz feldspezifischer Daten durch die erfindungsgemäße Einzelkornsämaschine 2 dienen. Das Feld 12 ist in eine Mehrzahl von Bearbeitungsspuren 13 eingeteilt. Diese Bearbeitungsspuren 13 werden üblicherweise in alternierender Bearbeitungsrichtung von dem Gespann aus Ackerschlepper 1 und Einzelkornsämaschine 2 überfahren, so dass das zu säende Saatgut ausgebracht werden kann. Die Breite einer Bearbeitungsspur 13 entspricht hierbei der Arbeitsbreite der Einzelkornsämaschine 2.

Wie vorstehend bereits beschrieben, ist es mit Hilfe der Einzelkornsämaschine 2 möglich innerhalb einer Reihe verschiedene Saatgutsorten auszubringen. Hierbei wird ein Saatgut L' von der Saatgutzubringeinrichtung 9L und ein zweites Saatgut R' von der Saatgutzubringeinrichtung 9R zugebracht. Weiter ist das Feld 12 anhand von in der Terminaleinheit 7 gespeicherten feldspezifischen Daten in unterschiedliche Saatbereiche R, L unterteilt. Generell weist das Feld 12 den Saatbereich R auf, in dem vorgesehen ist, das Saatgut R' auszubringen. Einzelne Teilflächen 14 unterscheiden sich jedoch bspw. hinsichtlich den Saataufgang beeinflussender Bodeneigenschaften von dem generellen Saatbereich R. Um auch in den Teilflächen 14 einen möglichst optimalen Saataufgang und somit ein möglichst optimales Arbeitsergebnis hinsichtlich des Ertrages zu erzielen, sind die Teilflächen 14 anhand der feldspezifischen Daten mit dem Saatbereich L gekennzeichnet. Das heißt, es ist vorgesehen, dass auf den Teilflächen 14 das Saatgut L' ausgebracht wird. Das Saatgut L' ist hierbei in besonderer Weise an die Bodeneigenschaften im Saatbereich L angepasst.

Wie vormals bereits erläutert, wird während der Überfahrt des Feldes 12 die Position der Säaggregate 5 mit den feldspezifischen Daten verglichen. Generell ist das Dosierorgan 10R aller Reihen aktiviert, es sei denn es wird ermittelt, dass ein oder mehrere Säaggregat(e) 5 sich im Saatbereich L befinden. Für diese(s) Säaggregat(e) 5 wird mit entsprechendem Vorlauf das Dosierorgan 10R deaktiviert, während gleichzeitig das Dosierorgan 10L aktiviert wird, so dass das Saatgut L' ausgebracht und in den Boden eingearbeitet werden kann. Im Rahmen der erreichbaren Genauigkeit, welche unter anderem beeinflusst wird durch den Reihen- und Ablageabstand, wird so möglichst exakt für das Feld 12 das Säbild aus Fig.4 erzeugt.

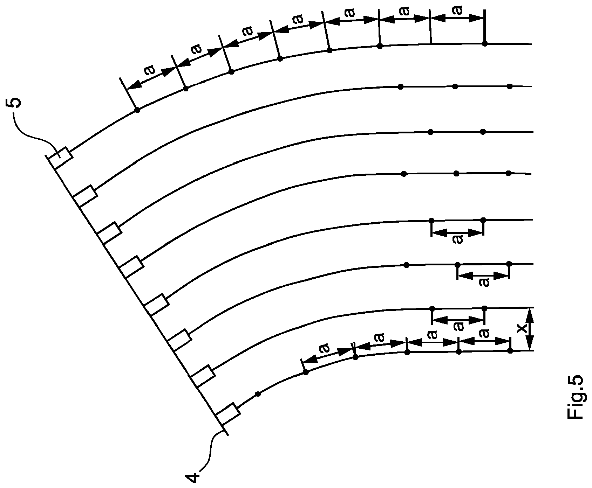

Ein weiteres Säbild, in diesem Fall bei Kurvenfahrt, ist in schematischer Ansicht in Fig.5 gezeigt. Der Tragbalken 4 mit den acht, daran befestigten Säaggregaten 5 ist im oberen Bereich angedeutet. Allgemein ist zu sehen, dass die Reiheneinheiten einen Abstand x zueinander aufweisen und innerhalb einer Reihe zwei aufeinanderfolgende Saatkörner im Abstand a abgelegt werden. Weiter ist gezeigt, dass in benachbarten Reihen das Saatgut versetzt zueinander abgelegt wird, so dass auch zwischen den Saatkörnern benachbarter Reihen ein möglichst äquidistanter Abstand entsteht. Um unterschiedliche Bahngeschwindigkeiten bei Kurvenfahrt zu kompensieren und eine möglichst äquidistante Ablage beizubehalten, ist vorgesehen, dass die Steuer- und/oder Regeleinrichtung in Abhängigkeit der Positionsänderung der Säaggregate 5 das jeweils zugeordnete Ausbringorgan 11 steuert. Im gezeigten Beispiel erfährt das Säaggregat 5 am rechten freien Ende des Tragbalkens 4 eine aus der Kurvenfahrt resultierende, erhöhte Bahngeschwindigkeit. Damit die Saatkörner innerhalb dieser Reihe weiterhin im Abstand a abgelegt werden, wird vom Jobrechner 6 das zugeordnete Ausbringorgan 11 angesteuert. Und zwar wird der Durchsatz erhöht indem beispielsweise die Drehzahl erhöht wird, so dass die Saatkörner in entsprechend gesteigerter Frequenz vereinzelt und abgelegt werden können. In umgekehrter Weise kann eine verlangsamte Bahngeschwindigkeit kompensiert werden, indem der Durchsatz verringert wird.

Damit auch während und/oder nach einer Kurvenfahrt schnell zwischen der Ausbringung der verschiedenen Saatgutsorten R, L gewechselt werden kann, ist vorgesehen, dass der Durchsatz des aktivierten Dosierorgans 10R, 10L zumindest annährend simultan nachgeregelt und so an die veränderten Parameter des Ausbringorganes 11 angepasst wird.

Die vorstehend beschriebene Sämaschine 2 ist dank einer vorteilhaft weitergebildeten Steuer- und/oder Regeleinrichtung, gebildet aus Jobrechner 6 und Terminaleinheit 7, dazu eingerichtet, verschiedene Saatgüter R', L' in gewinnbringender Weise in einer Überfahrt zu säen. Die Sämaschine 2 zeichnet sich hierbei durch einen besonders vereinfachten Aufbau aus und macht sich die Erkenntnis zunutze, dass ein Wechsel zwischen verschiedenen Saatgütern R', L' regelungstechnisch ohne nennenswerte zusätzliche komplexe Komponenten umsetzbar ist. Indes ist das Verhältnis zwischen den von den Dosierorganen 10R, 10L erzeugten Saatgutströmen und den von den Ausbringorganen 11 geförderten Saatgutmengen einstellbar.

### Bezugszeichenliste

- 1: Ackerschlepper
- 2: Einzelkornsämaschine
- 3: Vorratsbehälter
- 4: Tragbalken
- 5: Säaggregat
- 6: Jobrechner
- 7: Terminaleinheit
- 8: Saatgutvorratsbehälter
- 8A: Trennwand
- 9L, 9R: Saatgutzubringeinrichtung
- 10L, 10R: Dosierorgan
- 11: Ausbringorgan
- 12: Feld
- 13: Bearbeitungsspur
- L', R': Saatgutsorte
- 14: Teilffläche
- L, R: Saatbereich
- x, a: Abstand

## Patentansprüche

1. Sämaschine, insbesondere Einzelkornsämaschine (2), mit zumindest einem Säaggregat (5), wobei das Säaggregat (5) zumindest zwei getrennte Saatgutzubringeinrichtungen (9L, 9R) und zumindest ein Ausbringorgan (11) aufweist, wobei jede der Saatgutzubringeinrichtungen (9L, 9R) ein separates Dosierorgan (10L, 10R) zur Erzeugung eines Saatgutstroms zum Ausbringorgan (11) aufweist, und das Ausbringorgan (11) dazu eingerichtet ist eine Saatgutmenge zum Boden zu leiten, wobei die Sämaschine eine Steuer- und/oder Regeleinrichtung, die dazu eingerichtet ist, die Dosierorgane (10L, 10R) und das zumindest eine Ausbringorgan (11) des Säaggregates (5) zu steuern und feldspezifische Daten zu speichern, umfasst, wobei das Säaggregat (5) ein einziges Ausbringorgan (11) aufweist, **dadurch gekennzeichnet, dass** die Steuer- und/oder Regeleinrichtung dazu eingerichtet ist, das Verhältnis zwischen dem von zumindest einem der Dosierorgane (10L, 10R) erzeugten Saatgutstrom und der von dem Ausbringorgan (11) geförderten Saatgutmenge einzustellen, und dass das Verhältnis auf zumindest annährend eins eingestellt ist.

2. Sämaschine nach Anspruch 1, **dadurch gekennzeichnet, dass** die zumindest zwei getrennten Saatgutzubringeinrichtungen (9L, 9R) zumindest zwei voneinander unterschiedliche Saatgutsorten (L', R') zubringen.

3. Sämaschine nach zumindest einem der vorstehenden Ansprüche, **dadurch gekennzeichnet, dass** das Verhältnis zwischen Saatgutstrom und Saatgutmenge zumindest annährend konstant von der Steuer- und/oder Regeleinrichtung geregelt ist.

4. Sämaschine nach zumindest einem der vorstehenden Ansprüche, **dadurch gekennzeichnet, dass** die Steuer- und/oder Regeleinrichtung dazu eingerichtet ist, die Position und/oder Positionsänderung des zumindest einen Säaggregates (5) in einem bearbeiteten Feld (12) zu bestimmen, dass die Steuer- und/oder Regeleinrichtung in Abhängigkeit der Position des zumindest einen Säaggregates (5) im Feld die Dosierorgane (10L, 10R) steuert.

5. Sämaschine nach zumindest einem der vorstehenden Ansprüche, **dadurch gekennzeichnet, dass** die Steuer- und/oder Regeleinrichtung in Abhängigkeit der Positionsänderung des zumindest einen Säaggregates (5) das zugeordnete Ausbringorgan (11) steuert.

6. Sämaschine nach zumindest einem der vorstehenden Ansprüche, **dadurch gekennzeichnet, dass** die feldspezifischen Daten positionsbezogene Informationen über auszubringende Saatgutsorten (L', R') beinhalten.

7. Verfahren zum Betreiben einer Sämaschine, insbesondere zur Bearbeitung eines Feldes (12), nach zumindest einem der Ansprüche 1 bis 6, **dadurch gekennzeichnet, dass** in einer Steuer- und/oder Regeleinrichtung feldspezifische Daten gespeichert sind und die folgenden Verfahrensschritte:
a. Bestimmen einer Position und/oder Positionsänderung des zumindest einen Säaggregates (5) in dem zu bearbeitenden Feld (12),
*b*. Ansteuerung eines Dosierorgans (10L, 10R) der für die jeweilige Position eine geeignete Saatgutsorte (L', R') zubringenden Saatgutzubringeinrichtung (9L,9R) anhand der feldspezifischen Daten und/oder Ansteuern des zumindest einen Ausbringorgans (11) auf Basis der bestimmten Positionsänderungen.

## Claims

1. Seeder, in particular single-grain seeder (2), with at least one sowing unit (5), wherein the sowing unit (5) has at least two separate seed-loading devices (9L, 9R) and at least one spreading member (11), wherein each of the seed-loading devices (9L, 9R) has a separate metering member (10L, 10R) for producing a seed flow to the spreading member (11), and the spreading member (11) is configured to conduct a quantity of seed to the ground, wherein the seeder comprises a control and/or regulating device which is configured to control the metering members (10L, 10R) and the at least one spreading member (11) of the sowing unit (5) and to store field-specific data, wherein the sowing unit (5) has a single spreading member (11), **characterized in that** the control and/or regulating device is configured to set the ratio between the seed flow produced by at least one of the metering members (10L, 10R) and the quantity of seed conveyed by the spreading member (11), and **in that** the ratio is set to at least approximately one.

2. Seeder according to Claim 1, **characterized in that** the at least two separate seed-loading devices (9L, 9R) load at least two types of seed (L', R') differing from one another.

3. Seeder according to at least one of the preceding claims, **characterized in that** the ratio between seed flow and quantity of seed is regulated at least approximately constantly by the control and/or regulating device.

4. Seeder according to at least one of the preceding claims, **characterized in that** the control and/or regulating device is configured to determine the position and/or a change in position of the at least one sowing unit (5) in a cultivated field (12), **in that** the control and/or regulating device controls the metering members (10L, 10R) as a function of the position of the at least one sowing unit (5) in the field.

5. Seeder according to at least one of the preceding claims, **characterized in that** the control and/or regulating device controls the associated spreading member (11) as a function of the change in position of the at least one sowing unit (5).

6. Seeder according to at least one of the preceding claims, **characterized in that** the field-specific data include position-related information about types of seed (L', R') to be spread.

7. Method for operating a seeder, in particular for cultivating a field (12), according to at least one of Claims 1 to 6, **characterized in that** field-specific data are stored in a control and/or regulating device, and the following method steps:
*a.* determining a position and/or change in position of the at least one sowing unit (5) in the field (12) to be cultivated,
*b.* activating a metering member (10L, 10R) of the seed-loading device (9L, 9R), which loads a suitable type of seed (L', R') for the respective position, on the basis of the field-specific data, and/or activating the at least one spreading member (11) on the basis of the determined changes in position.

## Revendications

1. Semoir, en particulier semoir de précision (2), comportant au moins un élément semeur (5), dans lequel l'élément semeur (5) comprend au moins deux dispositifs de distribution de semences (9L, 9R) séparés et au moins un organe d'épandage (11), dans lequel chacun des dispositifs de distribution de semences (9L, 9R) comporte un organe de dosage (10L, 10R) séparé destiné à produire un flux de semences vers l'organe d'épandage (11), et l'organe d'épandage (11) est conçu pour diriger une quantité de semences vers le sol, dans lequel le semoir comprend un dispositif de commande et/ou de régulation qui est conçu pour commander les organes de dosage (10L, 10R) et ledit au moins un organe d'épandage (11) de l'élément semeur (5) et pour stocker des données propres au champ, dans lequel l'élément semeur (5) comporte un seul organe d'épandage (11),
**caractérisé en ce que** le dispositif de commande et/ou de régulation est conçu pour régler le rapport entre le flux de semences produit par ledit au moins un des organes de dosage (10L, 10R) et la quantité de semences délivrée par l'organe d'épandage (11), et **en ce que** le rapport est réglé à au moins environ un.

2. Semoir selon la revendication 1, **caractérisé en ce que** lesdits au moins deux dispositifs de distribution de semences (9L, 9R) séparés délivrent au moins deux variétés de semences (L', R') différentes l'une de l'autre.

3. Semoir selon au moins l'une des revendications précédentes, **caractérisé en ce que** le rapport entre le flux de semences et la quantité de semences est régulé à un niveau au moins approximativement constant par le dispositif de commande et/ou de régulation.

4. Semoir selon au moins l'une des revendications précédentes, **caractérisé en ce que** le dispositif de commande et/ou de régulation est conçu pour déterminer la position et/ou la variation de position dudit au moins un élément semeur (5) dans un champ (12) travaillé, et **en ce que** le dispositif de commande et/ou de régulation commande les organes de dosage (10L, 10R) en fonction de la position dudit au moins un élément semeur (5) dans le champ.

5. Semoir selon au moins l'une des revendications précédentes, **caractérisé en ce que** le dispositif de commande et/ou de régulation commande l'organe d'épandage (11) associé en fonction de la variation de position dudit au moins un élément semeur (5).

6. Semoir selon au moins l'une des revendications précédentes, **caractérisé en ce que** les données propres au champ contiennent des informations relatives à la position des variétés de semences (L', R') à épandre.

7. Procédé de fonctionnement d'un semoir, notamment pour le travail d'un champ (12), selon au moins l'une des revendications 1 à 6, **caractérisé en ce que** des données propres au champ sont stockées dans un dispositif de commande et/ou de régulation, et les étapes suivantes du procédé :
a. détermination d'une position et/ou d'une variation de position dudit au moins un élément semeur (5) dans le champ (12) à travailler,
b. commande d'un organe de dosage (10L, 10R) du dispositif de distribution de semences (9L, 9R) qui délivre une variété de semences (L', R') appropriée pour la position respective sur la base des données propres au champ et/ou commande d'au moins un organe d'épandage (11) sur la base des variations de position déterminées.
